# EUROPEAN PATENT APPLICATION

(11) **EP 4 481 443 A1**
(43) Date of publication of application: **25.12.2024**
(21) Application number: 23752982.1
(22) Date of filing: 14.02.2023
(51) Int. Cl.: G01T 1/00, G01T 7/00

(54) **ELECTRONIC DOSIMETER**

(30) Priority: 14.02.2022 JP 2022020208
(71) Applicant: Chiyoda Technol Corporation, Bunkyo-ku Tokyo 113-8681 (JP)
(72) Inventor: SUZUKI Toshikazu, Tokyo 113-8681 (JP)
(74) Representative: HGF
(86) International application number: PCT/JP2023/004962
(87) International publication number: WO 2023/153520

(57) **Abstract**

Provided is an electronic dosimeter that automatically transmits radiological dose data without a user having to perform a data transmission operation. A radiation detection unit (140) detects radiation, a recording unit (150) records detected radiological dose data, and a communication unit (160) transmits the recorded radiological dose data by means of a Bluetooth advertising signal. The transmission by means of the advertising signal is performed without the mediation of a user operation for data transmission. A control unit (120) detects that an electronic dosimeter (10) is not mounted on a user on the basis of the output of an acceleration sensor and/or a gyro sensor (110). When the electronic dosimeter (10) has not been mounted on the user for at least a prescribed amount of time, the control unit (120) suspends power supply to the radiation detection unit (140) or suspends transmission of the radiological dose data by the communication unit (160).

## Description

### TECHNICAL FIELD

The present invention relates to an electronic dosimeter that is worn by a radiation worker and wirelessly transmits radiation dose data to an external receiving device.

### BACKGROUND ART

Under current laws, radiation workers have to measure radiation exposure doses during radiation operations, and are obligated to wear small dosimeters for personal use (personal dosimeters). Dosimeters that are used as personal dosimeters are electronic dosimeters which mainly include a silicon semiconductor as a radiation detection unit and which are operated by a battery or the like.

In recent years, this type of electronic dosimeter that is capable of data communication with an external receiving device has been proposed, which enables a wearer to grasp the exposure dose of the wearer via another device.

### Citation List

### Patent Document

Patent Document 1: Japanese Unexamined Patent Application (Translation of PCT Application), Publication No. 2021-534420

### DISCLOSURE OF THE INVENTION

### Problems to be Solved by the Invention

Radiation dose data that is measured by an electronic dosimeter capable of data communication with an external device must be managed as a personal exposure dose for a certain period of time regardless of whether a wearer directly reads the radiation dose data from a dose display of the electronic dosimeter or reads the radiation dose data via data communication with a receiving device based on a data transmission operation of the wearer.

With the former method, the wearer records the radiation dose data after reading the radiation dose data from the dose display, which is cumbersome. With the latter method, for example, in a case in which the wearer fails to operate the electronic dosimeter to transmit data, data communication with the receiving device is not performed, and the exposure dose cannot be evaluated. Accordingly, acquisition of the most recent radiation dose data is left to the management of each wearer, which is not suitable from a viewpoint of radiation exposure dose management.

Further, the electronic dosimeter mainly uses a battery as a power source, and when the electronic dosimeter continuously performs radiation measurement or data transmission, even while the electronic dosimeter is not worn, power is consumed and it is necessary to replace the battery after a short period of time. Although, a power switch is provided on the electronic dosimeter, making the wearer turn the power source on and off leaves a possibility of the wearer forgetting to turn the power source on or forgetting to turn the power source off.

The present invention aims to provide an electronic dosimeter that transmits radiation dose data to an external receiving device without requiring active consideration by a user. Further, the present invention aims to provide an electronic dosimeter that suppresses power consumption in a case in which the user is not wearing the electronic dosimeter.

### Means for Solving the Problems

The present inventors found that radiation dose data is transmitted to the outside of an electronic dosimeter by a Bluetooth (registered trademark) advertising signal, and arrived at the completion of the present invention.
(1) An electronic dosimeter, characterized by comprising a communication unit that is mounted on the electronic dosimeter and that continuously and in one way transmits, by an advertising signal via Bluetooth, radiation dose data measured by a radiation detection unit mounted on the electronic dosimeter.
   The electronic dosimeter of (1) can transmit radiation dose data to external receiving device without requiring active consideration by a user.
(2) The electronic dosimeter according to (1), characterized by further comprising a control unit that detects that the electronic dosimeter is not being worn on a body by a gyro sensor, the acceleration sensor and/or a gyro sensor mounted on the electronic dosimeter, and, in a case in which the electronic dosimeter is judged to not have been worn for a predetermined period, stop transmission of the advertising signal or stops supply of power to the radiation detection unit.

The electronic dosimeter of (2) can suppress power consumption when the user does not wear the electronic dosimeter.

### Effects of the Invention

According to the present invention, it is possible for the wearer to communicate the radiation dose data without requiring active consideration by a user due to the radiation dose data being continuously or regularly transmitted by the advertising signal, and easily acquire and manage the radiation dose. Further, due to the acceleration sensor and/or the gyro sensor mounted on the electronic dosimeter, it is possible to detect whether or not the electronic dosimeter is worn, and while the electronic dosimeter is not worn, stop the transmission of radiation dose data or stop the supply of power to the radiation detection unit, and thereby suppress power consumption.

### BRIEF DESCRIPTION OF THE DRAWINGS

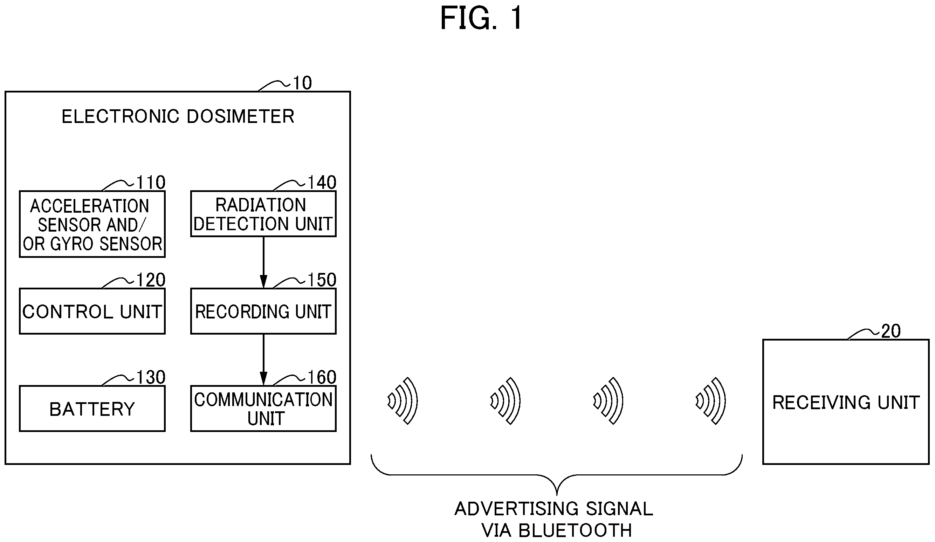

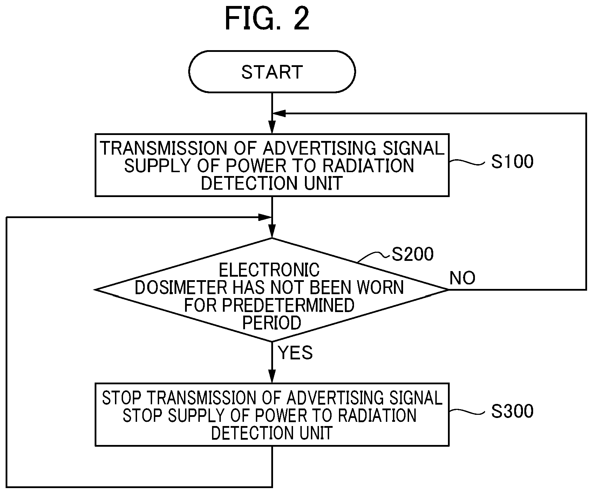

FIG. 1 is a diagram illustrating a configuration of an electronic dosimeter according to the present invention; and FIG. 2 is a flowchart illustrating an operation of the electronic dosimeter according to the present invention.

### PREFERRED MODE FOR CARRYING OUT THE INVENTION

The following describes embodiments of the present invention with reference to the drawings. FIG. 1 is a diagram illustrating a configuration of an electronic dosimeter according to the present invention. An electronic dosimeter 10 transmits measured radiation exposure dose data to a receiving device 20 by an advertising signal via Bluetooth. The electronic dosimeter 10 includes an acceleration sensor and/or a gyro sensor 110, a control unit 120, a battery 130, a radiation detection unit 140, a recording unit 150, and a communication unit 160.

The acceleration sensor and/or the gyro sensor 110 measures acceleration and/or angular velocity. The control unit 120 detects, based on the acceleration and/or the angular velocity measured by the acceleration sensor and/or the gyro sensor 110, that the user is not wearing the electronic dosimeter 10, and controls a power supply to the radiation detection unit 140 and an operation of the communication unit 160. The battery 130 is a power source for each part of the electronic dosimeter 10.

The radiation detection unit 140 mainly includes a silicon semiconductor and detects radiation. The recording unit 150 records radiation dose data detected by the radiation detection unit 140. The communication unit 160 transmits the radiation dose data recorded in the recording unit 150 to the outside by a Bluetooth advertising signal continuously or regularly.

The communication unit 160 transmits the radiation dose data recorded in the recording unit 150 to the outside by the Bluetooth advertising signal continuously or regularly, and thus it is unnecessary for the user to read the radiation dose data from a dosimeter display unit and it is further unnecessary to perform an operation for data transmission every time.

FIG. 2 is a flowchart illustrating an operation of the electronic dosimeter according to the present invention. In step S100, the communication unit 160 transmits the radiation dose data to the outside by the advertising signal. Further, the control unit 120 supplies power from a battery 30 to the radiation detection unit 140.

In step S200, the control unit 120 detects, based on an output of the acceleration sensor and/or the gyro sensor 110, that the user is not wearing the electronic dosimeter 10. An output level of the acceleration sensor and/or the gyro sensor 110 when the user is not wearing the electronic dosimeter 10 and the electronic dosimeter 10 has been placed on a desk is much lower than the output level of the acceleration sensor and/or the gyro sensor 110 when the user wears the electronic dosimeter 10 and is motionless. Accordingly, the control unit 120 can detect that the user is not wearing the electronic dosimeter 10 based on the output level of the acceleration sensor and/or the gyro sensor 110. In a case in which the user continues to not wear the electronic dosimeter 10 for a predetermined period or longer, the operation of the electronic dosimeter 10 proceeds to step S300. Otherwise, the operation of the electronic dosimeter 10 proceeds to step S100.

In step S300, the control unit 120 stops the transmission of the radiation dose data by the communication unit 160. Further, the control unit 120 stops a supply of power from the battery 130 to the radiation detection unit 140. In addition, the control unit may stop only one of the transmission of the radiation dose data by the communication unit 160 or the supply of power from the battery 130 to the radiation detection unit 140.

The transmission of radiation dose data by the electronic dosimeter 10 is not performed based on a request from the receiving device 20. Further, the receiving device 20 does not report to the electronic dosimeter 10 that the radiation dose data has been received. That is, transmission from the receiving device 20 to the electronic dosimeter 10 is not performed, and thus the transmission is one way. Accordingly, the transmission of radiation dose data by the electronic dosimeter 10 is "one way".

Further, the transmission of the radiation dose data is continuously or regularly performed, which does not mean that the transmission of the radiation dose data is no longer performed after the transmission of the radiation dose data ends at some point in time. Accordingly, the transmission of radiation dose data by the electronic dosimeter 10 is "continuous".

As described above, according to the present invention, it is possible for the wearer to communicate the radiation dose data without requiring active consideration by a user due to the radiation dose data being continuously or regularly transmitted by the advertising signal, and easily acquire and manage the radiation dose. Further, according to the present invention, due to the acceleration sensor and/or the gyro sensor mounted on the electronic dosimeter, it is possible to detect whether or not the electronic dosimeter is worn, and while the electronic dosimeter is not worn, stop the transmission of radiation dose data or stop the supply of power to the radiation detection unit, and thereby suppress power consumption.

### EXPLANATION OF REFERENCE NUMERALS

10 electronic dosimeter
20 receiving unit
110 acceleration sensor and/or gyro sensor
120 control unit
130 battery
140 radiation detection unit
150 recording unit
160 communication unit

## Claims

1. An electronic dosimeter, **characterized by** comprising a communication unit that is mounted on the electronic dosimeter and that continuously and in one way transmits, by an advertising signal via Bluetooth, radiation dose data measured by a radiation detection unit mounted on the electronic dosimeter.

2. The electronic dosimeter according to claim 1, **characterized by** further comprising a control unit that detects that the electronic dosimeter is not being worn on a body by an acceleration sensor and/or a gyro sensor mounted on the electronic dosimeter, and, in a case in which the electronic dosimeter is judged to not have been worn for a predetermined period, stops transmission of the advertising signal or stops supply of power to the radiation detection unit.
